# EUROPÄISCHE PATENTSCHRIFT

(11) **EP 1 355 754 B1**
(45) Veröffentlichungstag und Bekanntmachung des Hinweises auf die Patenterteilung: **15.09.2004**
(21) Anmeldenummer: 02708321.1
(22) Anmeldetag: 30.01.2002
(51) Int. Cl.: B23C 5/10

(54) **FRÄSWERKZEUG**
CUTTING TOOL
OUTIL DE FRAISAGE

(30) Priorität: 01.02.2001 DE 10104580
(43) Veröffentlichungstag der Anmeldung: 29.10.2003
(73) Patentinhaber: Gebr. Brasseler GmbH & Co. KG, D-32657 Lemgo (DE)
(72) Erfinder: RIEKE, Friedrich-Wilhelm, 32689 Kalletal-Bavenhausen (DE); NEUDECK, Thomas, 32657 Lemgo (DE); KÖSTER, Andreas, 32657 Lemgo (DE)
(74) Vertreter: Weber, Joachim, Dr.
(86) Internationale Anmeldenummer: PCT/EP2002/000971
(87) Internationale Veröffentlichungsnummer: WO 2002/060629

(56) Entgegenhaltungen:
- DE-C- 154 242
- DE-C- 313 494
- FR-A- 2 531 887
- FR-A- 2 749 203

## Beschreibung

Die Erfindung betrifft ein Fräswerkzeug und insbesondere einen sog. Hohlbohrer, wie er von Juwelieren oder Goldschmieden bei der Schmuckherstellung verwendet wird.

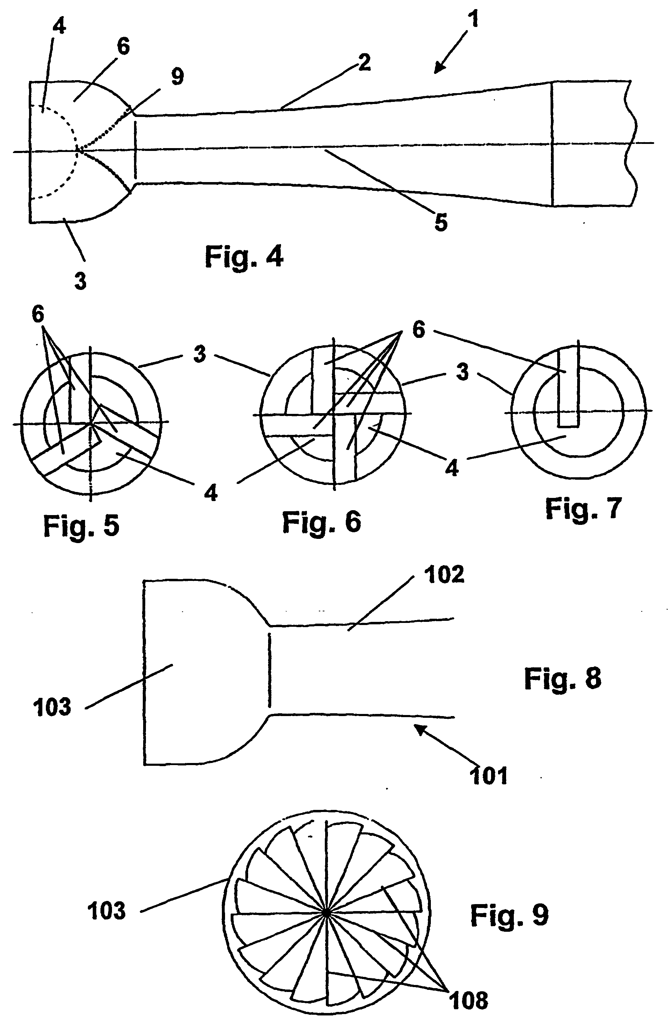

Solche Fräswerkzeuge bzw. Hohlbohrer sind bekannt. Sie dienen dazu, die Enden von Drähten, mit denen Schmucksteine in ihrer Fassung gehalten werden, mit einer Abrundung zu versehen. Für diese Arbeiten haben sich feinverzahnte Fräswerkzeuge bewährt, wie sie z. B. in Fig. 8 in einer Seitenansicht und in Fig. 9 in einer Stirnseitenansicht dargestellt sind. Das dort gezeigte Fräswerkzeug 101 besteht aus einem Schaft 102 und einem Arbeitsteil 103. An dem Arbeitsteil 103 sind eine Vielzahl von radial laufenden Schneidkanten 108 vorgesehen, die in der Mitte zusammenlaufen. Aufgrund diese Umstandes ergeben sich deutlich reduzierte Spanräume, die keine gute Spanabführung gewährleisten. Deshalb neigen diese bekannten Fräswerkzeuge bzw. Hohlbohrer zum Zusetzen und zum Verschmieren.

Es ist daher Aufgabe der vorliegenden Erfindung, ein Fräswerkzeug und insbes. einen Hohlbohrer zu schaffen, der den Arbeitsgang des Abrundens einfacher und schneller durchführen kann, ohne dass die Gefahr besteht, dass sich die Schneiden zusetzen.

Diese Aufgabe wird durch die im Anspruch 1 angegebenen Merkmale gelöst.

Durch diese Ausgestaltung wird ein Fräswerkzeug bzw. ein Hohlbohrer bereitgestellt, mit dem eine sichere Spanabführung gewährleistet ist, da durch die Schlitzung ein ausreichend großer Bereich für die Spanabführung zur Verfügung gestellt werden kann. Somit wird die Arbeit erleichtert und es kommt weder zu einem Zusetzen der Schneiden noch zu einem Verschmieren, welches auch in einer besseren Schnittfreudigkeit des Werkzeuges resultiert. Die Bohrung ist außermittig angebracht, so dass ihre Achse seitlich versetzt zur Werkzeugachse verläuft. Durch diese Ausgestaltung wird an der entstehenden Schneidkante ein Spanwinkel erzeugt, der die Schnittfreudigkeit des Werkzeuges günstig beeinflußt. Die Spanabführung wird in positivem Sinne beeinflußt durch mindestens einen Schlitz, dessen nacheilende Kante die Schneidkante bildet. Auf diese Weise wird eine Schneide erzeugt, die auf der Vorderseite genügend Raum für eine gute Spanabführung durch den Schlitz bietet und die auf der Rückseite einen ausreichenden Freiwinkel für ein gutes Eindringen der Schneide in das zu bearbeitende Material aufweist. Der Schlitz erstreckt sich von der Werkzeugachse bis zur Außenumfangsfläche des Arbeitsteils, und die nacheilende Seitenfläche des Schlitzes verläuft im wesentlichen durch die Werkzeugachse. Somit können die Späne nach außen abgeführt werden. Dies verhindert zusätzlich, dass sich die Schneiden zusetzen können.

Vorteilhafte Weiterbildungen sind in den Unteransprüchen angegeben.

Nach einer bevorzugten Weiterbildung sind mindestens zwei Bohrungen vorgesehen, deren Achsen achsparallel zueinander oder in einem Winkel, vorzugsweise von 0° bis 20°, zur Werkzeugachse verlaufen und die um den gleichen oder unterschiedliche Beträge aber in verschiedenen Richtungen seitlich zur Werkzeugachse versetzt angeordnet sind, so dass die Kontur der Bohrungen - von der Stirnseite aus betrachtet - einen leicht mittig eingeschnürten Kreis ergibt. Gerade diese Ausgestaltung stellt ein optimales Verhältnis zwischen Anzahl der Schneiden und zur Verfügung stehendem Spanraum dar.

Damit auch bei dieser Ausgestaltung eine optimale Spanabführung gewährleistet ist, sind vorzugsweise zwei Schlitze vorgesehen, die so angeordnet sind, dass je ein Schlitz - bezogen auf die Drehrichtung - unmittelbar vor einer Einschnürung liegt. Somit können von den jeweiligen Schneiden erzeugte Späne direkt über die Schlitze abgeführt werden, so dass ein Verstopfen besonders effektiv verhindert werden kann.

Nach alternativen Ausgestaltungsmöglichkeiten ist es auch möglich, mehr als zwei Schneidkanten vorzusehen. Wenn das der Fall ist, ist nach einer bevorzugten Weiterbildung vorgesehen, dass die Anzahl der außermittigen Bohrungen der Anzahl der Schneidkanten bzw. der Anzahl der Schlitze entspricht. Dadurch ist sichergestellt, dass die von jeder Schneide erzeugten Späne direkt von der Schnittstelle abgeführt werden, ohne dass es zu Verstopfungen kommen kann.

Bei mehreren Schneiden bzw. Bohrungen ist es aus herstellungstechnischen Gründen vorteilhaft, wenn die Bohrungen, die Schlitze und die Schneidkanten so angeordnet sind, dass sich ein symmetrischer Aufbau ergibt.

Die Spanabführung kann weiterhin dadurch verbessert werden, wenn gemäß einer bevorzugten Weiterbildung jeder Schlitz einen glatten, insbes. bogenförmigen Nutgrund aufweist. Eine solche Formgebung beeinflußt den Transport der Späne positiv, da ein Festsetzen der Späne und damit ein Verstopfen der Schlitze ausgeschlossen werden kann.

Durch die Form der Bohrung kann die am Werkstück erzeugte Form beeinflußt werden. Deshalb weist nach einer bevorzugten Ausgestaltung jede Bohrung - in Seitenansicht - die Form eines Halbkreises auf, so dass ein halbkugelförmiges Ende an dem Werkstück erzeugt wird.

Wird dagegen eine andere Endform gewünscht, kann auch eine andere Form der Bohrung vorgesehen sein. Z. B. kann jede Bohrung - in Seitenansicht - die Form eines Kegels aufweisen, so dass ein kegelförmiges Ende an dem Werkstück erzeugt wird.

Hinsichtlich des Versatzes der Bohrung und hinsichtlich der Breite der Schlitze kann in weiten Grenzen experimentiert werden. Es hat sich jedoch als besonders sinnvoll erwiesen, wenn der Versatz jeder außermittigen Bohrung 0 bis maximal etwa 0,25 des Durchmessers des Arbeitsteils beträgt und wenn die Breite der Schlitze 0 bis maximal etwa 0,5 des Durchmessers des Arbeitsteils beträgt. So können die Größe der Spanräume und die Abmessung der Spanabführung optimal aufeinander abgestimmt werden.

Weitere Vorteile, Merkmale und Ausgestaltungen der vorliegenden Erfindung ergeben sich aus der Beschreibung bevorzugter Ausführungsbeispiele. Es zeigen:
- Fig. 1: das erfindungsgemäße Fräswerkzeug in einer Seitenansicht,
- Fig. 2: das erfindungsgemäße Fräswerkzeug nach Fig. 1 in einer Stirnansicht,
- Fig. 3: die Ansicht nach Fig. 3, welche die genaue Anordnung der Bohrungen zeigt,
- Fig. 4: eine alternative Ausgestaltung des erfindungsgemäßen Fräswerkzeuges in Seitenansicht,
- Fig. 5 bis 7: weitere Ausführungsformen des erfindungsgemäßen Fräswerkzeuges in einer Stirnansicht,
- Fig. 8: ein Fräswerkzeug nach dem Stand der Technik in Seitenansicht, und
- Fig. 9: das Fräswerkzeug nach Fig. 8 in einer Stirnansicht.

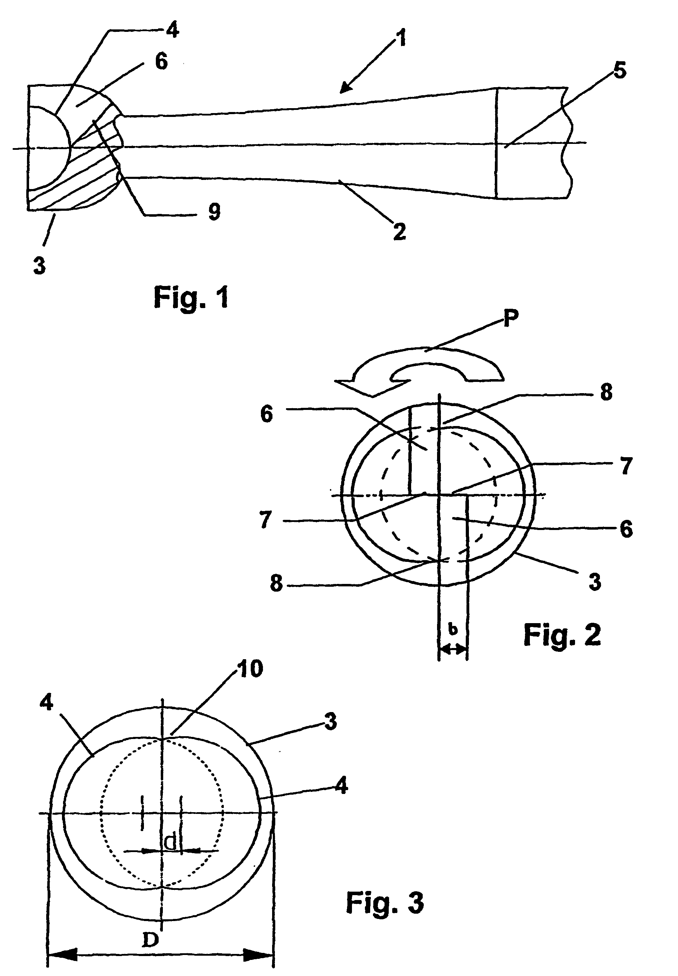

In Fig. 1 bis 3 ist eine erste Ausführungsform eines Fräswerkzeug 1 dargestellt, das insbesondere als Hohlbohrer in der Schmuckbearbeitung Verwendung findet. Das Fräswerkzeug 1 umfasst einen Schaft 2, an dessen vorderem Ende ein Arbeitsteil 3 vorgesehen ist. In den Arbeitsteil 3 sind von seiner Stirnseite her bei dieser Ausführungsform zwei Bohrungen 4 eingebracht. Die Bohrungen 4 sind achsparallel zueinander und zur Werkzeugachse 5 angebracht und um ein Maß d seitlich zur Werkzeugachse 5 versetzt, so dass sich ein leicht eingeschnürter Kreis ergibt, wenn man die Kontur der beiden Bohrungen 4 von der Stirnseite des Fräswerkzeuges 1 her betrachtet (vgl. Fig. 3). Das Maß d des seitlichen Versatzes der Bohrung 4 von der Werkzeugachse 5 kann beliebige Werte annehmen und beträgt vorzugsweise 0 bis maximal etwa 0,25 des Durchmessers D des Arbeitsteils 3.

Die Anordnung der Bohrungen 4 ist so gewählt, dass sich ein insgesamt symmetrischer Aufbau des Arbeitsteils 3 ergibt. In Fig. 2 ist dies besonders gut daran erkennbar, dass die Mittelpunkte 7 der Bohrungen 4 gleich weit von einer Symmetrieachse des Fräswerkzeuges 1 entfernt liegen.

In dem Arbeitsteil 3 sind weiterhin zwei Schlitze 6 angeordnet, deren in Drehrichtung P hinten liegende untere Kante eine Schneidkante 8 bildet. Die Schlitze 6 sind genau so positioniert, dass sich je ein Schlitz 6 an eine der von der Kontur der Bohrungen 4 gebildeten Einschnürungen 10 anschließt. Sie liegen dabei - bezogen auf die Drehrichtung P des Fräswerkzeuges 1 - unmittelbar vor der Einschnürung (vgl. Fig. 2). Somit verläuft die nacheilende Seitenfläche des Schlitzes 6 im wesentlichen durch die Werkzeugachse 5.

Die Breite der Schlitze 6 kann beliebige Werte annehmen und beträgt vorzugsweise 0 bis maximal etwa 0,5 des Durchmessers D des Arbeitsteils 3.

Der Nutgrund 9 der Schlitze 6 ist glatt ausgebildet, um eine reibungslose Spanabführung zu gewährleisten. Er kann, wie in Fig. 1 gezeigt, eben oder, wie bei einer alternativen Ausführungsform in Fig. 4 gezeigt, bogenförmig ausgebildet sein.

Das erfindungsgemäße Fräswerkzeug 1 ist vorzugsweise mit zwei Bohrungen 4, zwei Schlitzen 6 und zwei Schneidkanten 8 versehen. Es ist jedoch auch möglich, drei oder vier Schneidkanten 8 vorzusehen, wie in den Fig. 5 und 6 gezeigt ist. Die Anordnung der Bohrungen 4, der Schlitze 6 und der Schneidkanten 8 ist so getroffen, dass sich ein insgesamt symmetrischer Aufbau des Arbeitsteils 3 ergibt (vgl. Fig. 5 und 6).

Alternativ zu den in den Fig. 1 bis 6 dargestellten Ausführungsformen kann auch nur eine einzige Schneidkante 8 vorgesehen sein (vgl. Fig. 7). Wenn nur eine einzige Schneidkante 8 vorgesehen ist, kann u. U. auf den Versatz der Bohrung 4 verzichtet werden. In jedem Fall entspricht jedoch die Anzahl der Bohrungen 4 auch der Anzahl der Schneidkanten 8 bzw. der Anzahl der Schlitze 6.

Alternativ können die Bohrungen auch nicht achsparallel, also in einem Winkel, vorzugsweise von 0° bis 20° und weiter bevorzugt von 0° bis 10°, zur Werkzeugachse ausgebildet sein, obgleich dies in den Figuren 1 bis 9 nicht dargestellt ist. Dennoch werden im Wesentlichen die gleichen vorteilhaften Wirkungen, wie in den Ausführungsbeispielen gemäß den Figuren 1 bis 9 beschrieben, erreicht.

## Patentansprüche

1. Fräswerkzeug, insbesondere Hohlbohrer mit einem Schaft (2) und einem Arbeitsteil (3), wobei im Bereich der Stirnseite des Arbeitsteils (3) mindestens eine Schneidkante (8) ausgebildet ist und wobei in die Stirnseite mindestens eine Bohrung (4) eingebracht ist, deren Achse achsparallel oder in einem Winkel, vorzugsweise von 0° bis 20°, zur Werkzeugachse (5) verläuft, und wobei die Bohrung (4) außermittig angebracht ist, so dass ihre Achse seitlich versetzt zur Werkzeugachse (5) verläuft, **dadurch gekennzeichnet, dass** stirnseitig mindestens ein Schlitz (6) vorgesehen ist, dessen nacheilende Kante die Schneidkante (8) bildet, und der sich von der Werkzeugachse (5) bis zur Außenumfangsfläche des Arbeitsteils (3) erstreckt, wobei die nächeilende Seitenfläche des Schlitzes (6) im Wesentlichen durch die Werkzeugachse (5) verläuft.

2. Fräswerkzeug nach Anspruch 1, **dadurch gekennzeichnet, dass** mindestens zwei Bohrungen (4) vorgesehen sind, deren Achsen achsparallel zueinander oder in einem Winkel, vorzugsweise von 0° bis 20°, zur Werkzeugachse (5) verlaufen und die um den gleichen oder unterschiedliche Beträge aber in verschiedenen Richtungen seitlich zur Werkzeugachse (5) versetzt angeordnet sind, so dass die Kontur der Bohrungen (4) - von der Stirnseite aus betrachtet - einen leicht mittig eingeschnürten Kreis ergibt.

3. Fräswerkzeug nach Anspruch 1 oder 2, wobei zwei Schlitze (6) vorgesehen sind, die so angeordnet sind, dass je ein Schlitz (6) - bezogen auf die Drehrichtung (P) - unmittelbar vor einer Einschnürung (10) liegt.

4. Fräswerkzeug nach einem der vorhergehenden Ansprüche, wobei mehrere Schneidkanten (8) vorgesehen sind und wobei die Anzahl der außermittigen Bohrungen (4) der Anzahl der Schneidkanten (8) bzw. der Anzahl der Schlitze (6) entspricht.

5. Fräswerkzeug nach einem der vorhergehenden Ansprüche, wobei die Bohrungen (4), die Schlitze (6) und die Schneidkanten (8) so angeordnet sind, dass sich ein symmetrischer Aufbau ergibt.

6. Fräswerkzeug nach einem der vorhergehenden Ansprüche, wobei jeder Schlitz (6) einen glatten, insbes. bogenförmigen Nutgrund (9) aufweist.

7. Fräswerkzeug nach einem der vorhergehenden Ansprüche, wobei jede Bohrung (4) - in Seitenansicht - die Form eines Halbkreises aufweist.

8. Fräswerkzeug nach einem der vorhergehenden Ansprüche, wobei jede Bohrung (4) - in Seitenansicht - die Form eines Kegels aufweist.

9. Fräswerkzeug nach einem der vorhergehenden Ansprüche, wobei der Versatz (d) jeder Bohrung (4) 0 bis maximal etwa 0,25 des Durchmessers (D) des Arbeitsteils (3) beträgt.

10. Fräswerkzeug nach einem der vorhergehenden Ansprüche, wobei die Breite (b) der Schlitze (6) 0 bis maximal etwa 0,5 des Durchmessers (D) des Arbeitsteils (3) beträgt.

## Claims

1. A cutting tool, in particular an auger, comprising a shaft (2) and a working piece (3), whereby at least one cutting edge (8) is embodied in the region of the front face of the working piece (3) and at least one drilling (4) is provided in the front face, the axis of which is parallel to the axis (5) of the tool or at an angle of, preferably, 0° to 20° thereto, and whereby the drilling (4) is applied off-centre so that its axis runs laterally offset to the tool axis (5), **characterised in that** at least one groove (6) is provided whose lagging edge forms the cutting edge (8) and which extends from the tool axis (5) as far as the periphery area of the working piece (3), whereby the lagging lateral face of the groove (6) for the most part runs through the tool axis (5).

2. The cutting tool according to claim 1, wherein at least two drillings (4) are provided, the axes of which are parallel to one another, or at an angle of, preferably, 0° to 20° to the axis of the tool (5), and which are arranged laterally offset to the tool axis (5) by the same or different amounts but in various directions, so that the contour of the drillings (4) - as seen from the front face - results in a circle slightly constricted at the centre.

3. The cutting tool according to claim 1 or claim 2, wherein two grooves (6) are provided, arranged such that one groove (6) in each case - related to the direction of rotation (P) - lies immediately in front of the constriction (10).

4. The cutting tool according to one of the preceding claims, wherein a number of cutting edges (8) are provided and whereby the number of off-centre drillings (4) corresponds to the number of cutting edges (8) or the number of grooves (6).

5. The cutting tool according to one of the preceding claims, wherein the drillings (4), the grooves (6) and cutting edges (8) are arranged such that the resulting layout is symmetrical.

6. The cutting tool according to one of the preceding claims, wherein each groove (6) exhibits a smooth, particularly bow-shaped groove base (9).

7. The cutting tool according to one of the preceding claims, wherein each drilling (4) - when viewed from the side - exhibits the form of a semicircle.

8. The cutting tool according to one of the preceding claims, wherein each drilling (4) - when viewed from the side - exhibits the form of a cone.

9. The cutting tool according to one of the preceding claims, wherein the offset (d) of each drilling (4) is from 0 to a maximum of about 0.25 of the diameter (D) of the working piece (3).

10. The cutting tool according to one of the preceding claims, wherein the width (b) of the grooves (6) is from 0 to a maximum of about 0.5 of the diameter (D) of the working piece (3).

## Revendications

1. Outil de fraisage, en particulier mèche creuse, comportant une tige (2) et une pièce de travail (3), au moins un bord coupant (8) étant prévu dans la zone du côté avant de la pièce de travail (3), et au moins un alésage (4) étant ménagé dans le côté avant, dont l'axe s'étend de façon axialement parallèle ou selon un angle compris de préférence entre 0° et 20° par rapport à l'axe de l'outil (5), et l'alésage (4) étant excentré, de telle sorte que son axe est décalé latéralement par rapport à l'axe de l'outil (5), **caractérisé en ce que** au moins une fente (6) est prévue côté avant, dont le bord en retard constitue le bord coupant (8), et qui s'étend depuis l'axe de l'outil (5) jusqu'à la surface périphérique extérieure de la pièce de travail (3), la surface latérale en retard de la fente (6) passant ce faisant essentiellement par l'axe de l'outil (5).

2. Outil de fraisage selon la revendication 1, **caractérisé en ce qu'**au moins deux alésages (4) sont prévus, dont les axes sont parallèles entre eux ou s'étendent en formant un angle, de préférence entre 0° et 20° par rapport à l'axe de l'outil (5) et qui sont disposés de façon à être autant ou différemment décalés, mais dans des directions différentes latéralement à l'axe de l'outil (5), de sorte que le contour des alésages (4) - vu du côté avant - forme un cercle légèrement resserré au centre.

3. Outil de fraisage selon la revendication 1 ou 2, dans lequel deux fentes (6) sont prévues, qui sont disposées de telle sorte que chaque fente (6) - par rapport au sens de rotation (P) - se trouve immédiatement avant un resserrement (10).

4. Outil de fraisage selon l'une quelconque des revendications précédentes, dans lequel plusieurs bords coupants (8) sont prévus, et dans lequel le nombre des alésages excentrés (4) correspond au nombre de bords coupants (8) ou au nombre de fentes (6).

5. Outil de fraisage selon l'une quelconque des revendications précédentes, dans lequel les alésages (4), les fentes (6) et les bords coupants (8) sont disposés de telle sorte qu'il est créée une structure symétrique.

6. Outil de fraisage selon l'une quelconque des revendications précédentes, dans lequel chaque fente (6) présente un fond de rainure (9) lisse, en particulier en arc de cercle.

7. Outil de fraisage selon l'une quelconque des revendications précédentes, dans lequel chaque alésage (4) - vu de côté - présente une forme en demi-cercle.

8. Outil de fraisage selon l'une quelconque des revendications précédentes, dans lequel chaque alésage (4) - vu de côté - présente une forme conique.

9. Outil de fraisage selon l'une quelconque des revendications précédentes, dans lequel le décalage (d) de chaque alésage (4) est compris entre 0 et au plus environ 0,25 du diamètre (D) de la pièce de travail (3).

10. Outil de fraisage selon l'une quelconque des revendications précédentes, dans lequel la largeur (b) des fentes (6) est comprise entre 0 et au plus environ 0,5 du diamètre (D) de la pièce de travail (3).
